# EUROPEAN PATENT SPECIFICATION

(11) **EP 1 332 562 B1**
(45) Date of publication and mention of the grant of the patent: **24.10.2007**
(21) Application number: 00976924.1
(22) Date of filing: 03.11.2000
(51) Int. Cl.: H04B 1/16

(54) **APPARATUS FOR REDUCING PHASE NOISE IN A LOCAL CARRIER SIGNAL CAUSED BY POWERING DOWN OF CIRCUIT ELEMENTS DURING DISCONTINUOUS DATA TRANSMISSIONS**
VORRICHTUNG ZUR UNTERDRÜCKUNG VON PHASENRAUSCHEN IN EINEM LOKAL ERZEUGTEN TRÄGERSIGNAL, HERVORGERUFEN DURCH ABSCHALTUNG VON SCHALTUNGSELEMENTEN WÄHREND DISKONTINUIERLICHER DATENÜBERTRAGUNGEN
DISPOSITIF DESTINE A REDUIRE LE BRUIT DE PHASE DANS UN SIGNAL DE PORTEUSE LOCAL PROVOQUE PAR LA MISE HORS TENSION D'ELEMENTS DE CIRCUIT LORS DE TRANSMISSIONS DE DONNEES DISCONTINUES

(43) Date of publication of application: 06.08.2003
(73) Proprietor: QUALCOMM INCORPORATED, San Diego, CA 92121-1714 (US)
(72) Inventor: GARD, Kevin, G., San Diego, CA 92128 (US); SAHOTA, Kamal, Gurkanwal, San Diego, CA 92103 (US); WALKER, Brett, C., San Diego, CA 92131 (US)
(74) Representative: Walsh, Michael Joseph
(86) International application number: PCT/US2000/030409
(87) International publication number: WO 2002/037704

(56) References cited:
- MEYER R G ET AL: "A 2.5-GHZ BICMOS TRANSCEIVER FOR WIRELESS LAN'S" IEEE JOURNAL OF SOLID-STATE CIRCUITS,US,IEEE INC. NEW YORK, vol. 32, no. 12, 1 December 1997 (1997-12-01), pages 2097-2104, XP000767458 ISSN: 0018-9200
- PATENT ABSTRACTS OF JAPAN vol. 1995, no. 03, 28 April 1995 (1995-04-28) & JP 06 350478 A (SANYO ELECTRIC CO LTD), 22 December 1994 (1994-12-22)

## Description

### BACKGROUND OF THE INVENTION

### I. Field of the Invention

The present invention relates to communications circuits. More particularly, the present invention relates to method and apparatus for reducing phase noise of carrier signals due to switching of circuit elements in a transmit signal path.

### II. Description of the Related Art

In a typical RF communications system, data is processed at a transmitter device, modulated, conditioned, and transmitted to a receiver device. The modulation scheme can be M-ary phase shift keying (e.g., BPSK, QPSK, OQPSK, and so on), M-ary quadrature amplitude modulation (i.e., M-QAM), or some other scheme. At the receiver device, the modulated signal is received, conditioned, demodulated, and processed to recover the transmitted data. The signal conditioning at the transmitter and receiver devices typically includes amplification, filtering, automatic gain control, frequency conversion, and so on.

Modulation and frequency conversion are performed at the transmitter device using one or more carrier signals. The carrier signals are typically generated such that the amount of noise on the signals and the characteristics of the noise conform to a particular phase noise specification. The specification ensures that the modulated signal is not excessively degraded by the modulation or frequency conversion with the carrier signals.

For some communications systems, the transmitted signal is gated on and off during a particular data transmission to reduce interference to other transmitter devices. The gating can be achieved by either switching the circuit elements in the transmit signal path or by gating the signals provided to the circuit elements. The continual gating of the transmitted signal can degrade the performance of the circuitry used to generate the carrier signals. In particular, the continual gating may introduce spurious signals and/or additional noise in the carrier signals, which may then be reflected in the modulated signal and ultimately, result in performance degradation at the receiver device.

"A 2.5-GHZ BiCMOS Transceiver for Wireless LAN'S" of Meyer et al, published December 1997 describes a low-cost Si IC which contains most of the elements required to realize the RF transmit and receive paths of a WLAN transceiver meeting 802.11 requirements.

### SUMMARY OF THE INVENTION

The present invention relates to a communications device as claimed in claim 1 and a mobile terminal as claimed in claim 13.

The present invention provides techniques to reduce the amount of degradation in the carrier signals due to switching of circuit elements in a transmitter while minimizing power consumption. Initially, a determination is made of the circuits and nodes in the communications device that may be sensitive to the circuit switching. Circuit elements in the transmitter are selectively powered down during periods of no transmissions to reduce power consumption. The powered down circuit elements are selected such that the sensitive circuits and nodes are minimally disturbed.

An embodiment of the invention provides a communication device for use in a wireless communications system (e.g. an IS-95 CDMA system). The device includes one or more signal generators coupled to a transmitter. Each signal generator is designed to provide a respective carrier signal. The transmitter receives and modulates one or more carrier signals with one or more input signals to generate a modulated signal, which is gated on and off during a particular data transmission. The transmitter includes one or more input buffers, with each input buffer receiving and buffering a respective carrier signal. The input buffers are maintained biased for the duration of the data transmission, even as the modulated signal is gated on and off, to provide a constant load for the signal generators and to isolate the signal generators from switching noise.

The transmitter typically includes a number of active circuit elements (e.g., buffers, amplifiers, mixers, power amplifier, and so on) used to generate the modulated signal. Some of the active circuit elements may be powered down when the modulated signal is gated off to reduce power consumption. The transmitter can be implemented within one integrated circuit, and all or a portion of each signal generator can be implemented external to the integrated circuit. In some designs, the signal generators include two voltage controlled oscillators (VCOs) used to generate an RF carrier signal and an IF carrier signal. The signal generators are typically maintained operational for the duration of the data transmission.

In a specific design, the device further includes a receiver that receives and downconverts a received signal with at least one carrier signal to generate a downconverted signal. The receiver also includes at least one input buffer to receive and buffer at least one carrier signal. Again, the input buffer(s) are maintained biased for the duration of the data transmission. The transmitter and receiver may be designed to share a common RF carrier signal used either directly or indirectly to upconvert a transmitted signal in the transmitter and to downconvert a received signal in the receiver.

For a digital communications system, data transmission typically occurs over discrete time periods (e.g.,1.25 msec). The modulated signal can be gated on or off for each time period.

### BRIEF DESCRIPTION OF THE DRAWINGS

The features, nature, and advantages of the present invention will become more apparent from the detailed description set forth below when taken in conjunction with the drawings in which like reference characters identify correspondingly throughout and wherein:
FIG. 1 is a simplified block diagram of an embodiment of the signal processing for a data transmission in a communications system;
FIG. 2 is a block diagram of the signal processing for a reverse link data transmission from a terminal to a base station in accordance with the IS-95 CDMA standard;
FIG. 3 is a diagram illustrating the gating of the data transmission on the reverse link in accordance with the IS-95 standard;
FIG. 4 is a block diagram of a specific embodiment of a transmitter that processes I and Q baseband signals to generate a modulated signal suitable for transmission;
FIG. 5 is a block diagram of an embodiment of an RF LO generation circuits for a communications device; and
FIG. 6 is a diagram that illustrates the noise on the RF LO due to switching of circuit elements in the transmitter.

### DETAILED DESCRIPTION OF THE SPECIFIC EMBODIMENTS

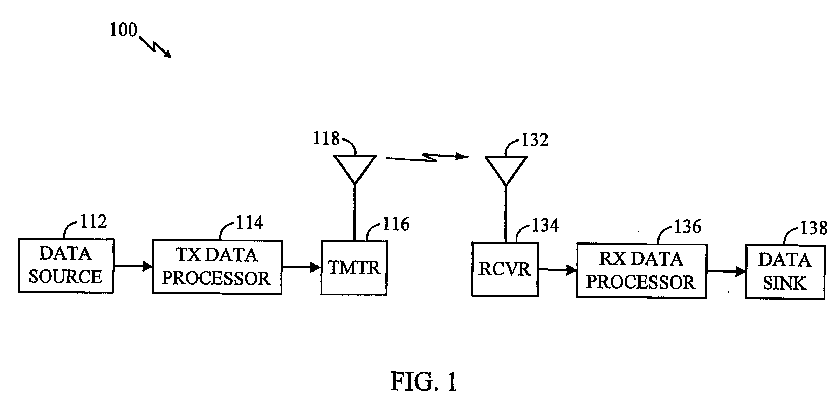

FIG. 1 is a simplified block diagram of an embodiment of the signal processing for a data transmission in a communications system 100. At the transmitter unit, data is sent, typically in packets, from a data source 112 to a transmit (TX) data processor that formats, encodes, and processes the data to provide baseband signals. The baseband signals are provided to a transmitter (TMTR) 116, quadrature modulated, filtered, amplified, and upconverted to generate a modulated signal that is transmitted via an antenna 118 to one or more receiver units.

At a receiver unit, the modulated signal is received by an antenna 132 and provided to a receiver (RCVR) 134. Within receiver 134, the received signal is amplified, filtered, downconverted, quadrature demodulated to baseband, and digitized to provide inphase and quadrature samples. The samples are provided to a receive (RX) data processor 136, and decoded and processed to recover the transmitted data. The decoding and processing at the receiver unit are performed in a manner complementary to that performed at the transmitter unit. The recovered data is provided to a data sink 138.

The signal processing described above supports transmissions of packet data, messaging, voice, video, and other types of communication in one direction. A bi-directional communications system supports two-way data transmission. However, the signal processing for the other direction is not shown in FIG.1 for simplicity.

Communications system 100 can be a code division multiple access (CDMA) system, a time division multiple access (TDMA) communications system (e.g., a GSM system), a frequency division multiple access (FDMA) communications system, or other multiple access communications system that supports voice and data communication between users over a terrestrial link.

CDMA systems are typically designed to conform to one or more standards such as the "TIA/EIA/IS-95-A Mobile Station-Base Station Compatibility Standard for Dual-Mode Wideband Spread Spectrum Cellular System" (hereinafter referred to as the IS-95-A standard), the "TIA/EIA/IS-98 Recommended Minimum Standard for Dual-Mode Wideband Spread Spectrum Cellular Mobile Station" (hereinafter referred to as the IS-98 standard), the standard offered by a consortium named "3rd Generation Partnership Project" (3GPP) and embodied in a set of documents including Document Nos. 3G TS 25.211, 3G TS 25.212, 3G TS 25.213, and 3G TS 25.214 (hereinafter referred to as the W-CDMA standard), and the "TIA/EIA/IS-2000.2-A TR-45 Physical Layer Standard for cdma200 Spread Spectrum Systems" (hereinafter referred to as the CDMA-2000 standard). New CDMA standards are continually proposed and adopted for use.

For a multiple access communications system, each transmitting device acts as interference to other transmitting devices in the system. The capacity of a communications link is limited by the total interference that a particular transmitting device experiences from other transmitting devices.

In the IS-95 CDMA system, several techniques are employed to minimize interference and maximize the reverse link capacity. First, the transmit power of each transmitting terminal is controlled such that the desired level of performance (e.g., a particular frame erasure rate FER) is maintained at the receiving base station. And second, fewer bits are transmitted when the user is not speaking, thereby using less power and reducing interference to other users. A variable rate speech vocoder provides speech data at full rate when a user is actively speaking and at low rate during period of silence, e.g. pauses. Each active terminal thus transmits at a different bit rate depending on the level of speech activity of the user at the terminal.

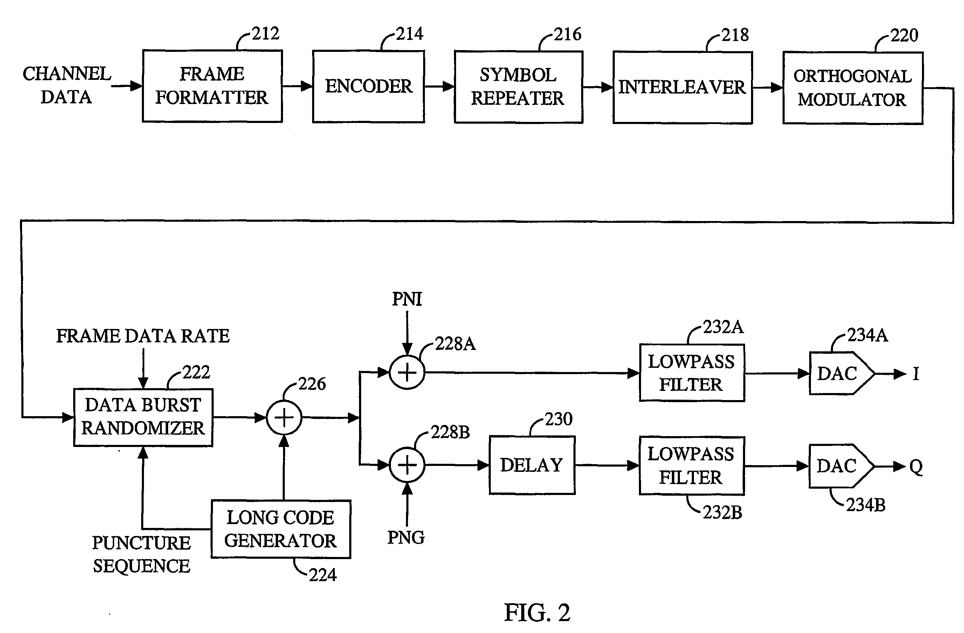

FIG. 2 is a block diagram of the signal processing for a reverse link data transmission from a terminal to a base station in accordance with the IS-95 standard. The signal processing shown in FIG. 2 can be performed by transmit data processor 114 in FIG. 1. Variable rate data to be transmitted is provided to a frame formatter 212 that formats each data packet with the necessary control fields, cyclic redundancy check (CRC) bits, and code tail bits. The formatted data is then encoded with a particular convolutional code by an encoder 214 and provided to a symbol repeater 216. Symbol repeater 216 repeats the code symbols within each frame by a particular amount to generate an output frame having a fixed symbol rate (e.g., 28.8 Ksps). The number of repetition for each code symbol is dependent on the particular data rate of the frame being processed. For example, each code symbol may be represented once, twice, four times, or eight times for full, half, quarter, and eighth rate, respectively. The code symbols within the frame are then interleaved (i.e., reordered) by an interleaver 218 and provided to an orthogonal modulator 220.

Modulator 220 groups the code symbols within each frame into sets of six symbols, with each set being used to select a particular 64-chip Walsh symbol. The sequence of Walsh symbols are then selectively punctured (i.e., deleted or removed) by a data burst randomizer 222 in accordance with a frame data rate signal and a puncture sequence from a long code generator 224. The puncturing removes redundant Walsh symbols when transmitting at less than full rate. The punctured symbols are then scrambled by a multiplier 226 with a long PN sequence from long code generator 224 and spread by multipliers 228a and 228b with short PNI and PNQ sequences, respectively.

Offset-QPSK modulation is employed on the reverse link of the IS-95 CDMA system. Thus, the quadrature symbols from multiplier 228b are delayed by half a chip period by a delay element 230. The inphase symbols from multiplier 228a and the quadrature symbols from delay element 230 are then lowpass filtered by respective lowpass filters 232a and 232b and converted to analog signals by respective digital-to-analog converters (DACs) 234a and 234b to generate the inphase (I) and quadrature (Q) baseband signals. The data processing for the reverse link is described in further detail in the IS-95 standard.

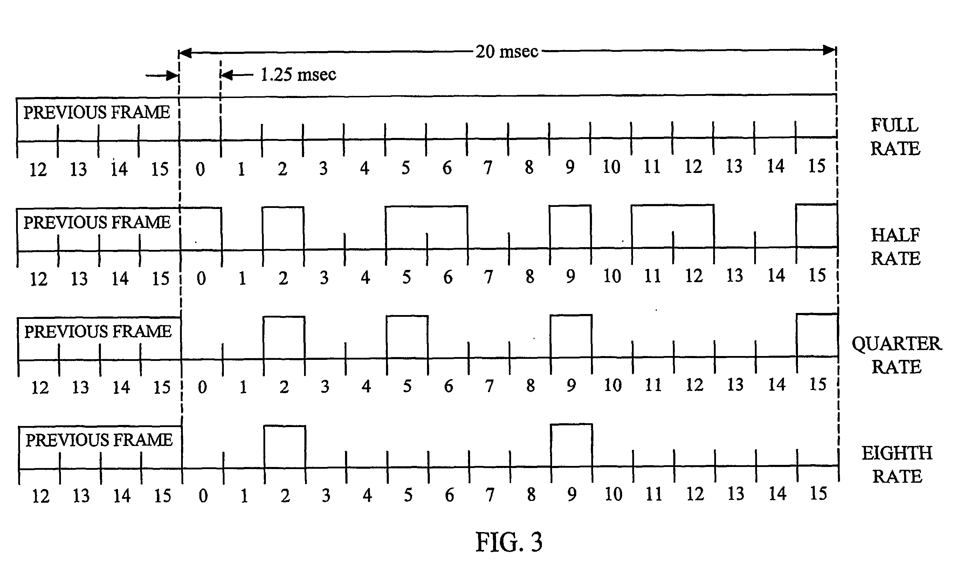

FIG. 3 is a diagram illustrating the gating of the data transmission on the reverse link in accordance with the IS-95 standard. The symbol stream from orthogonal modulator 220 is gated on and off to allow for transmission of certain symbols in a particular frame and deletion of remaining symbols. The symbol gating reduces the amount of interference to other terminals and enhances the reverse link capacity.

As shown in FIG. 3, each frame on the reverse link has a duration of 20 msec and is divided into 16 periods of equal duration (1.25 msec). The periods are also referred to as "power control groups". In accordance with the IS-95 standard, each power control group may be gated on (i.e., transmitted) or gated off (i.e., not transmitted) depending on the particular data rate of the frame and the puncture sequence.

Four data rates are supported by rate set 1 of the IS-95 standard and range from 800 bps to 8.6 Kbps. At the highest data rate (i.e., "full rate"), all symbols are transmitted by the terminal, as shown at the top of FIG. 3. At half rate, half of the power control groups are gated on to allow for transmission of the symbols within the transmitted power control groups, and the other half power control groups are gated off to effectively delete the symbols from transmission. Similarly, one-quarter of the power control groups are gated on for quarter rate, and one-eighth of the power control groups are gated on for eight rate.

In accordance with the IS-95 standard, data burst randomizer 222 in FIG. 2 performs the gating on and off of the power control groups in accordance with the frame data rate signal and the pseudo-random puncture sequence. The transmitted power control groups are thus pseudo-randomized in their positions within each frame but are selected in a manner that ensures that each code symbol provided to symbol repeater 216 is transmitted once. The gating of the data transmission on the reverse link is further described in the IS-95 standard.

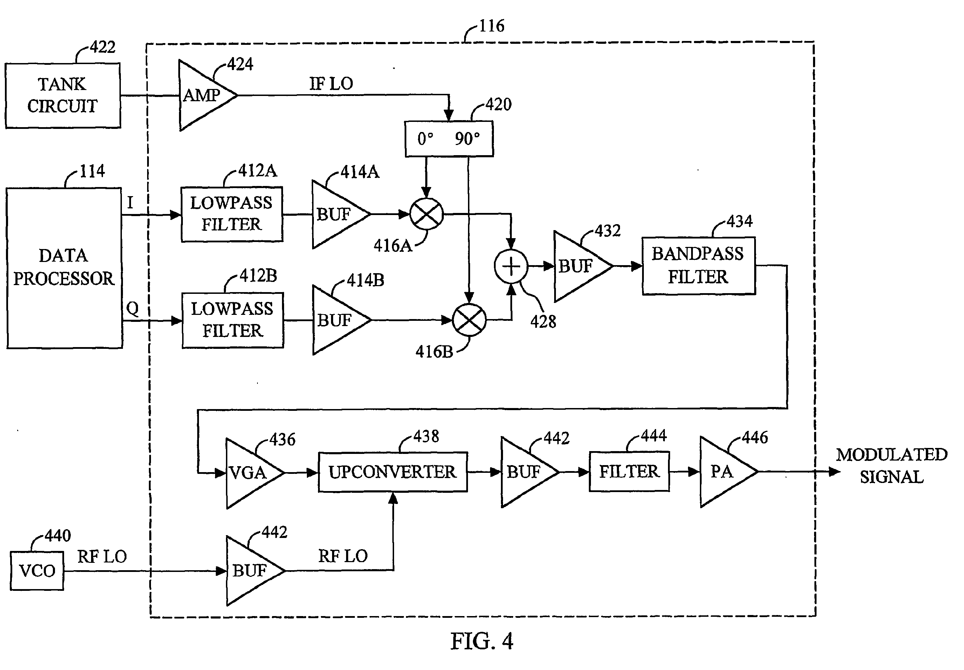

FIG. 4 is a block diagram of a specific embodiment of transmitter 116 that processes the I and Q baseband signals from transmit data processor 114 to generate the modulated signal suitable for transmission over the air. Within transmitter 116, the I and Q signals are provided to lowpass filters 412a and 412b, respectively, and filtered to remove the DAC images (and possibly compensate for the sinx/x roll-off due to the DACs). The filtered I and Q signals are then buffered by respective buffers 414a and 414b, and modulated by respective mixers 416a and 416b with an inphase intermediate frequency carrier signal (i.e., IF LO) and a quadrature IF LO, respectively. The inphase and quadrature IF LOs are generated by an IF phase splitter 420 based on an IF LO provided by an IF oscillator comprised of a tank circuit 422 coupled to an amplifier 424. The inphase and quadrature IF components from mixers 416a and 416b are summed together by a summer 428 to generate a modulated IF signal, which is then buffered by a buffer 432 and filtered by a bandpass filter 434 to remove out-of-band noise and undesired spurious signals.

The filtered IF signal from bandpass filter 434 is then amplified by a variable gain amplifier (VGA) 436 with a gain determined by a gain control signal from a gain control circuit (not shown) to provide an output signal having the desired signal level. The amplified IF signal is then upconverted to radio frequency (RF) by an upconverter 438 with a second carrier signal that is generated by buffering an RF LO from an external voltage controlled oscillator (VCO) 440 with a buffer 442. The RF signal from upconverter 438 is then buffered by a buffer 444 and filtered by a bandpass filter 446 to remove images generated by the preceding frequency upconversion stage. The filtered signal is amplified by a power amplifier (PA) 448 to generate the modulated signal, which is then routed through a duplexer and transmitted from an antenna (both elements not shown in FIG. 4).

The transmitter architecture shown in FIG. 4 employs an IF modulation stage and an RF frequency upconversion stage. The modulation stage includes a double sideband upconverter and an image reject filter. A single sideband upconverter can also be implemented.

Various modifications can be made to the transmitter architecture shown in FIG. 4. For example, the transmit signal path can be designed to include fewer or more buffer and amplifier stages, fewer or more filters, and other circuits. Moreover, the elements within the transmit signal path can be arranged in different configurations. Transmitter 116 can be implemented within one (or possibly more) integrated circuit to reduce circuit complexity and costs.

The specific transmitter architecture shown in FIG. 4 is one of many possible designs. Other transmitter architectures are also possible and are within the scope of the invention. In another specific transmitter architecture, quadrature modulation is performed digitally on the I and Q samples within the transmit data processor. The digitally modulated signal is then directly upconverted to RF by a frequency upconversion stage.

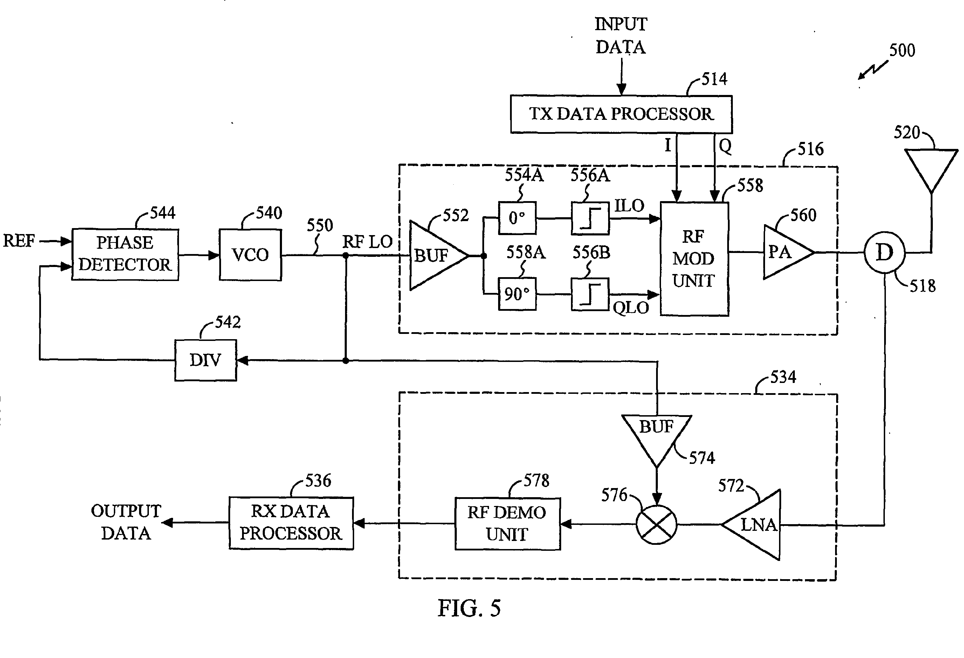

FIG. 5 is a block diagram of a specific embodiment of an RF LO generation circuitry for a communication device 500. Communication device 500 can be part of a user terminal or a base station in an IS-95 CDMA system, and includes circuitry that supports concurrent transmission and reception of data. The transmit signal path includes a transmit data processor 514, a transmitter 516, a duplexer 518, and an antenna 520 coupled in series. Transmit data processor 514 and transmitter 516 can correspond to transmit data processor 114 and transmitter 116 described above. The receive signal path includes antenna 520, duplexer 518, a receiver 534, and a receive data processor 536 coupled in series. The modulation scheme and digital signal processing for the transmit signal path may be different from those for the receive signal path, as in the IS-95 CDMA system.

To simplify the design of communications device 500, a common RF voltage controlled oscillator (VCO) 540 is employed to generate the RF LO for both transmit and receive signal paths. Although the transmitted and received signals may be assigned to different frequencies (such as for the IS-95 CDMA system), the RF LO from the common VCO may be used either directly or indirectly in a modulation/demodulation or frequency conversion stage in each of the two signal paths.

As shown in FIG. 5, VCO 540 is part of a phase lock loop (PLL) that also includes a divider 542, a phase detector 544, and a loop filter 546. Phase detector 544 receives a reference signal (e.g., a reference clock) and a frequency divided signal from divider 542, compares the phases of the two signals, and generates a phase error signal that is filtered by loop filter 546 to generate a control signal. The control signal adjusts the frequency of VCO 540 such that the phase of the divided signal is locked to that of the reference signal. The RF LO from VCO 540 is provided to transmitter 516 and receiver 534.

Within transmitter 516, the RF LO is buffered by a buffer 552 and provided to subsequent circuitry. In the specific design shown in FIG. 5, direct upconversion is employed and the buffered RF LO is shifted 0° and 90° by phase shifters 554a and 554b, respectively, and further amplified and clipped by limiters 556a and 556b, respectively, to generate the ILO and QLO. The ILO and QLO and the I and Q baseband signals from transmit data processor 514 are provided to an RF modulator unit 558 that performs buffering, amplification, modulation, filtering, and frequency conversion similar to that described above for transmitter 116. The modulated signal from RF modulator unit 558 is amplified by a power amplifier 560, routed through duplexer 518, and transmitted from antenna 520.

In the receive signal path, the modulated signal from the base station is received by antenna 520, routed through duplexer 518, and provided to receiver 534. Within receiver 534, the received signal is amplified by a low noise amplifier (LNA) 572 and provided to a mixer 576. The RF LO from VCO 540 is also provided to receiver 534, buffered by a buffer 574, and provided to mixer 576. Mixer 576 mixes the received signal with the buffered RF LO from buffer 574 to perform a frequency or quadrature downconversion, depending on the particular design of receiver 534. The downconverted signal is provided to an RF demodulator unit 578, conditioned, and further processed to generate baseband samples that are then provided to receive data processor 536.

The IS-95 CDMA system is designed as a wireless communications system, and the user terminals are typically mobile. For these mobile units, power consumption is an important design consideration and, to conserve power, it is desirable to power off circuit elements that are not in use. The power saving prolongs the operating life of the terminal between battery recharges. The power saving may also enable the use of a smaller and lighter battery, which is also highly desirable for a mobile application.

To reduce power consumption, it is also desirable to power down as many active circuit elements as possible when transmitting at less than full rate (e.g., during non-transmitted power control groups). Referring to FIG. 3, symbols are deleted (i.e., gated off) when transmitting at less then full rate to reduce the amount of interference to other terminals. A control signal (e.g., POWER_ON) indicative of whether a power control group is gated on or off can be provided, for example, by transmit data processor 114 and used to control the switching of the circuit elements in the transmitter.

Referring to FIG. 4, the gating on and off of the modulated signal can be achieved at various locations along the transmit signal path. For example, the signal at any point along the transmit signal path or the carrier signals (e.g., the IF LO or RF LO) provided to transmitter 116, or both, can be gated.

When a power control group is gated off, some of the active circuit elements in the transmit signal path may be powered down to conserve power. For example, phase shifters 554, limiters 556, RF modulation unit 558, and power amplifier 560 may be powered down during periods of no data transmission (e.g., during non-transmitted power control groups). In particular, power amplifier 560 is typically biased with a large amount of current to provide the required drive capability, and large power saving may be achieved if the power amplifier can be powered down without causing excessive performance degradation. The powered down circuit elements are then be powered up prior to the next transmitted power control group. To properly warm up the circuit elements, the powering up can be performed a short time period before the elements are actually used.

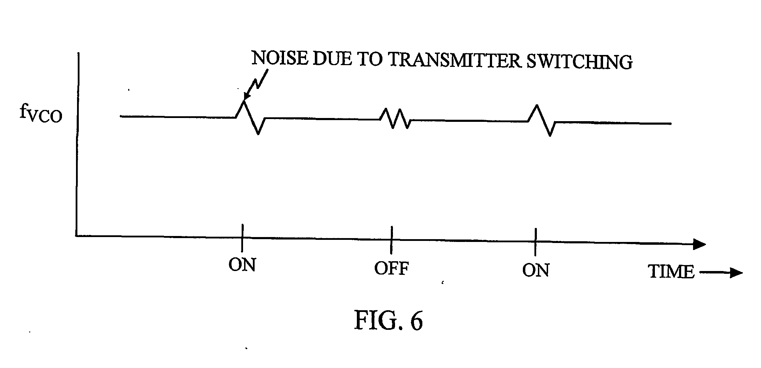

FIG. 6 is a diagram that illustrates the noise on the RF LO due to switching of circuit elements in the transmitter. As shown in FIG. 6, at the time in which a power control group is switched (either ON of OFF), noise is generated within the transmitter and reflected or induced on the RF LO. The switching noise causes deviations (i.e., glitches) in the frequency of the RF LO at approximately the time at which the circuit elements are switched. The frequency deviations degrade the phase noise characteristic of the RF LO, which in turn degrade the transmitted and received signals processed with the RF LO.

In accordance with the IS-95 standard, the switching noise on the reverse link has a fundamental rate of 800 Hz corresponding to the 1.25 msec period of a power control group. Thus, spurious signals at integer multiples of the fundamental rate of 800 Hz appear in the RF LO. These spurious signals are typically too low in frequency to be filtered by loop filter 546 within the RF phase locked loop used to generate the RF LO.

For the particular design shown FIG. 5, noise induced on the RF LO affects the receive signal path as well as the transmit signal path. In the IS-95 CDMA system, the forward link transmission is continuous and not gated as for the reverse link transmission. Moreover, the forward and reverse link transmissions are typically independent of one another. Thus, as the transmitter is switched on and off during a particular data transmission, the receiver may be continuously processing a received signal. It is highly undesirable for the switching in the transmitter to degrade the performance of the receiver.

In accordance with the invention, the active circuit elements in the transmitter are selectively powered down during periods of no transmission. Initially, a determination is made of the circuits and nodes in the communications device that may be sensitive to the switching of circuit elements in the transmitter. Active circuit circuits in the transmitter are selectively powered down during periods of no transmission such that the sensitive circuits and nodes are minimally disturbed.

Identification of the sensitive circuits and nodes can be made using circuit analysis, empirical measurements, other techniques, or a combination thereof. For example, a determination of whether node 550 corresponding to the signal trace for the RF LO is sensitive to switching noise can be made by measuring the phase noise of the RF LO as the circuit elements within transmitter 516 are switched. If the phase noise degrades excessively when the circuit elements are switched, than the circuit element or node is sensitive to the switching noise. The sensitive elements and nodes are then buffered from the switching noise.

A determination may also be made of circuit elements that can be powered down during periods of no transmissions. The system performance (e.g., bit-error-rate BER, or frame-erasure-rate FER) or the phase noise of the carrier signals (e.g., the RF LO) may be measured as the circuit elements in the transmit signal path are switched (e.g., one at a time). If performance degrades by more than a particular amount when a particular circuit element is switched, that element is not switched on and off during a data transmission.

As an example, in FIG. 5, node 550 is likely to be a sensitive node in the communications device. To ensure that this node is minimally affected by the switching in the transmitter, buffer 552 within transmitter 516 is appropriately biased and maintained biased so that the loading on VCO 540 remains approximately constant even as other circuit elements in transmitter 516 are switched. The active circuitry after buffer 552 (e.g., phase shifters 554, limiters 556, RF modulation unit 558, and power amplifier 560) may be powered on and off whenever possible to conserve power. Buffer 552 thus behaves as a buffer that blocks switching noise in the transmit signal path from disturbing the operation of VCO 540. Buffer 552 further functions to isolate switching noise generated in transmitter 516 from rippling through node 550 onto receiver 534.

Similarly, buffer 574 within receiver 534 is maintained biased so that the loading on VCO 540 remains approximately constant. The other active circuitry within receiver 534 (e.g., LNA 572, mixer 576, and RF demodulation unit 578) may be powered on and off whenever possible to conserve power.

Maintaining buffer 552 biased is typically sufficient to isolate VCO 540 from the switching of circuit elements in the transmit signal path. In certain instances, it may be necessary to maintain bias to additional circuit elements such as, for example, phase shifters 554. The number of circuit elements that are powered on generally determines the amount of isolation from switching noise, and higher isolation may be achieved by maintaining more circuit elements biased. To maximize performance, the minimum number of circuit elements is maintained biased such that the phase noise of the carrier signal is marginally degraded while consuming the smallest amount of power.

The LO generation circuits in a communication device are typically sensitive to switching and loading changes. For the design shown in FIG. 4, the sensitive circuits typically include the IF LO and RF LO generation circuits. To reduce the amount of degradation on these sensitive circuits due to switching noise, the circuits are powered on for the duration of the data transmission (i.e., the duration of a communication). For example, for the RF LO generator shown in FIG. 5, the elements of the RF phase locked loop including phase detector 544, loop filter 546, VCO 540, and divider 542 are maintained powered on. The load circuits (e.g., buffers 552 and 578) for VCO 540 are also maintained powered on to provide a constant load, and to buffer against switching noise from other circuits coupled to the load circuits. Other active circuit elements may be switched (i.e., powered on and off) without excessively degrading the performance of the VCO generation circuits.

Referring to FIG. 4, the IF LO generation circuits can be similarly designed to reduce degradation due to switching noise generated in the transmitter. For example, tank circuit 422, amplifier 424, and a buffer 426 within phase splitter 420 can be powered on for the duration of the data transmission. Buffer 426 isolates the IF LO generation circuits from noise generated by the switching of circuit elements in the transmitter.

In some specific implementations, transmitter 516 and receiver 534 may be fabricated within the same or separate integrated circuits and the LO generation circuits may be implemented external to the integrated circuit(s). For these implementations, each integrated circuit may be designed to buffer each received carrier signal with an input buffer (e.g., buffers 552 and 574 in FIG. 5). The input buffers can be maintained biased during a data transmission to provide a constant load for the LO generation circuits.

Generally, circuit elements of the LO generation circuits are maintained on for the duration of the data transmission. Since these circuit elements typically require some time period to warm up and settle, they are not switched within a short interval (e.g., between power control groups). Moreover, switching these circuit elements on and off may generate phase discontinuities in the carrier signals, which can degrade system performance.

For clarity, the invention has been described for reducing degradation in the phase noise of the VCO. However, the invention can be applied to other circuits that may also be sensitive to changes in the transmit signal path. For example, a transmitter typically also uses reference voltages, bias currents, and so on. If the circuits used to generate these signals are sensitive to switching noise, then they may be appropriately buffered to reduce the amount of degradation from the switching noise.

Also, for clarity, the invention has been described specifically in the context of the reverse link data transmission in an IS-95 CDMA system in which some of the power control groups are punctured based on the frame data rate. However, the invention may also be used in other communications systems that may have gated transmission or may exhibit other changes in the transmit signal path.

The foregoing description of the preferred embodiments is provided to enable any person skilled in the art to make or use the present invention. Various modifications to these embodiments will be readily apparent to those skilled in the art, and the generic principles defined herein may be applied to other embodiments without the use of the inventive faculty. Thus, the present invention is not intended to be limited to the embodiments shown herein but is to be accorded the widest scope consistent with the principles and novel features disclosed herein.

## Claims

1. A communications device (500) for use in a wireless communications system, comprising:
one or more signal generators (540, 542, 544) each signal generator operative to provide a respective carrier signal (550),
a transmitter (516) coupled to the one or more signal generators and operative to receive and modulate one or more carrier signals from the one or more signal generators with one or more input signals to generate a modulated signal, the transmitter gating the modulated signal on and off during a particular data transmission and including
one or more input buffers (552,574) biased for the duration of the particular data transmission, each input buffer operative to receive and buffer a respective carrier signal; and
a receiver (534) coupled to at least one of the one or more signal generators for receiving at least one carrier signal (550), the receiver operative to downconvert a received signal with the at least one carrier signal during the entire particular data transmission even when the transmitter gates the modulated signal on and off.

2. The device of claim 1, wherein the transmitter is implemented within one integrated circuit, and wherein at least a portion of each of the one or more signal generators is implemented external to the integrated circuit.

3. The device of claim 1, wherein the one or more signal generators includes a first voltage controlled oscillator VCO (540) used to generate an RF carrier signal.

4. The device of claim 3, wherein the one or more signal generators further includes a second VCO used to generate an IF carrier signal.

5. The device of claim 1, wherein the one or more signal generators are operational for the duration of the particular data transmission.

6. The device of claim 1, wherein the transmitter further includes at least one active circuit element operative to generate the modulated signal and powered down when the transmitter gates the modulated signal off.

7. The device of claim 6, wherein the transmitter includes a power amplifier (560) operative to amplify the modulated signal when the transmitter gates the modulated signal on and powered down when the transmitter gates the modulated signal off.

8. The device of claim 1, wherein the receiver includes at least one input buffer (574) biased for the duration of the particular data transmission, each input buffer operative to receive and buffer a respective carrier signal.

9. The device of claim 8, wherein the transmitter is operative to either directly or indirectly upconvert (558) a transmitted signal with an RF carrier signal and the receiver is operative to downconvert (576) the received signal with the RF carrier signal.

10. The device of claim 1, wherein the transmitter is operative to gate the modulated signal on or off for each of multiple discrete time periods for the particular data transmission.

11. The device of claim 10, wherein the duration of each time period is 1.25 msec.

12. The device of claim 1, wherein the wireless communications system conforms to IS-95 standard.

13. The device of claim 1, further comprising:
a data processor operative to process data in accordance with multiple rates, and wherein the transmitter gates the modulated signal on and off for at least a subset of the multiple rates.

14. The device of claim 13, wherein the transmitter gates the modulated signal on for an entire frame for each frame transmitted at full rate.

15. The device of claim 13, wherein the transmitter gates the modulated signal on and off for each frame transmitted at less than full rate.

16. A mobile terminal for use in a wireless communications system, comprising:
a signal generator (540, 542, 544) operative to provide a carrier signal at an RF frequency (550);
a transmitter (516) coupled to the signal generator and operative to receive and modulate the carrier signal with one or more input signals to generate a modulated signal, the transmitter gating the modulated signal on and off during a particular data transmission; and
a receiver (534) coupled to the signal generator and operative to receive and downconvert (576) a received signal with the carrier signal to generate a downconverted signal during the entire particular data transmission even when the transmitter gates the modulated signal on and off, and
wherein the transmitter and receiver each includes an input buffer (552,574) operative to receive and buffer the carrier signal and biased for the duration of the particular data transmission even as the transmitter gates the modulated signal on and off.

## Patentansprüche

1. Eine Kommunikationseinrichtung (500) zur Nutzung in einem drahtlosen Kommunikationssystem, die Folgendes aufweist:
einen oder mehrere Signalgeneratoren (540, 542, 544), wobei jeder Signalgenerator betreibbar ist zum Vorsehen eines entsprechenden Trägersignals (550);
ein Sender bzw. Übertrager (516), der mit dem einen oder den mehreren Signalgeneratoren gekoppelt ist und betreibbar ist zum Empfangen und Modulieren von einem oder mehreren Trägersignalen von dem einen oder den mehreren Signalgeneratoren mit einem oder mehreren Eingangssignalen zum Erzeugen eines modulierten Signals, wobei der Sender das modulierte Signal während einer bestimmten Datenübertragung ein- und ausblendet bzw. ein- und ausschaltet und Folgendes beinhaltet:
einen oder mehreren Eingangs-Puffer (552, 574) vorgespannt bzw. betrieben für die Dauer der bestimmten Datenübertragung, wobei jeder Eingangs-Puffer betreibbar ist zum Empfangen und zum Puffern eines entsprechenden Trägersignals; und
einen Empfänger (534), der mit wenigstens einem von dem einen oder den mehreren Signalgeneratoren zum Empfangen von wenigstens einem Trägersignal (550) gekoppelt ist, wobei der Empfänger betreibbar ist zum Herabkonvertieren eines empfangenen Signals mit dem wengistens einen Trägersignal während der gesamten bestimmten Datenübertragung selbst wenn der Sender das modulierte Signal ein- und ausblendet.

2. Einrichtung nach Anspruch 1, wobei der Sender mit einer integrierten Schaltung implementiert ist, und wobei wenigstens ein Teil von jedem des einen oder der mehreren Signalgeneratoren extern von der integrierten Schaltung implementiert ist.

3. Einrichtung nach Anspruch 1, wobei der eine oder die mehreren Signalgeneratoren einen ersten spannungsgesteuerten Oszillator VCO (540) beinhaltet oder beinhalten, der zum Erzeugen eines HF Trägersignals genutzt wird.

4. Einrichtung nach Anspruch 3, wobei der eine oder die mehreren Signalgeneratoren ferner einen zweiten VCO beinhaltet oder beinhalten, der genutzt wird zum Erzeugen eines ZF Trägersignals.

5. Einrichtung nach Anspruch 1, wobei der eine oder die mehreren Signalgeneratoren betriebsbereit für die Dauer der bestimmten Datenübertragung ist oder sind.

6. Einrichtung nach Anspruch 1, wobei der Sender ferner wenigstens ein Aktivschaltkreiselement beinhaltet, das betreibbar ist zum Erzeugen des modulierten Signals und das abgeschaltet wird, wenn der Sender das modulierte Signal ausblendet bzw. abschaltet.

7. Einrichtung nach Anspruch 6, wobei der Sender einen Leistungsverstärker (560) beinhaltet, der betreibbar ist zum Verstärken des modulierten Signals, wenn der Sender das modulierte Signal einblendet und der abgeschaltet wird, wenn der Sender das modulierte Signal ausblendet.

8. Einrichtung nach Anspruch 1, wobei der Empfänger wenigstens einen Eingangs-Puffer (574) beinhaltet, der vorgespannt bzw. betrieben wird, für die Dauer der bestimmten Datenübertragung, wobei jeder Eingangspuffer betriebsbereit ist, zum Empfangen und Puffern eines entsprechenden Trägersignals.

9. Einrichtung nach Anspruch 8, wobei der Sender betreibbar ist, um entweder direkt oder indirekt ein gesendetes Signal mit einem HF Trägersignal Hochzukonvertieren (558) und der Empfänger betreibbar ist, zum Herabkonvertieren (576) des empfangenen Signals mit dem HF Trägersignal.

10. Einrichtung nach Anspruch 1, wobei der Sender betreibbar ist zum Aus- oder Einblenden des modulierten Signals für jede der mehreren diskreten Zeitperioden für die bestimmte Datenübertragung.

11. Einrichtung nach Anspruch 10, wobei die Dauer jeder Zeitperiode 1,25 msek beträgt.

12. Einrichtung nach Anspruch 1, wobei das drahtlose Kommunikationssystem dem IS-95 Standard konform ist.

13. Einrichtung nach Anspruch 1, die ferner Folgendes aufweist:
einen Datenprozessor, der betreibbar ist zum Verarbeiten von Daten gemäß mehreren Raten bzw. Geschwindigkeiten wobei der Sender das modulierte Signal ein- und ausblendet für wenigstens einen Subsatz bzw. Teilsatz der mehreren Raten.

14. Einrichtung nach Anspruch 13, wobei der Sender das modulierte Signal für einen gesamten Rahmen für jeden mit voller Rate gesendeten Rahmen einblendet.

15. Einrichtung nach Anspruch 13, wobei der Sender das modulierte Signal für jeden mit weniger als der vollen Rate gesendeten Rahmen ein- und ausblendet.

16. Ein Mobilterminal bzw. ein mobiles Endgerät zur Nutzung in einem drahtlosen Kommunikationssystem, wobei das Mobilterminal Folgendes aufweist:
einen Signalgenerator (540, 542, 544) der betreibbar ist zum Vorsehen eines Trägersignals mit einer HF Frequenz (550);
einen Sender bzw. Übertrager (516), der mit dem Signalgenerator gekoppelt ist, und der betreibbar ist zum Empfangen und Modulieren des Trägersignals mit einem oder mehreren Eingangssignalen zum Erzeugen eines modulierten Signals, wobei der Sender das modulierte Signal ein- und ausblendet bzw. ein- und ausschaltet und zwar während einer bestimmten Datenübertragung; und
einen Empfänger (534) der mit dem Signalgenerator gekoppelt ist, und der betreibbar ist zum Empfangen und Herabkonvertieren (576) eines empfangenen Signals mit dem Trägersignal zum Erzeugen eines herabkonvertieren Signals und zwar während der gesamten bestimmten Datenübertragung, selbst wenn der Sender das modulierte Signal ein- und ausblendet; und
wobei der Sender und der Empfänger jeweils einen Eingangs-Puffer (552, 574) beinhalten, der betreibbar ist, zum Empfangen und Puffern des Trägersignals und der vorgespannt bzw. betrieben wird, für die Dauer der bestimmten Datenübertragung selbst wenn der Sender das modulierte Signal ein- und ausblendet.

## Revendications

1. Dispositif de communication (500) destiné à être utilisé dans un système de communication sans fil comprenant :
un ou plusieurs générateurs de signal (540, 542, 544), chaque générateur de signal agissant pour fournir un signal de porteuse (550) respectif,
un émetteur (516) couplé auxdits un ou plusieurs générateurs de signal et agissant pour recevoir et moduler un ou plusieurs signaux de porteuse à partir desdits un ou plusieurs générateurs de signal, avec un ou plusieurs signaux d'entrée pour produire un signal modulé, l'émetteur laissant passer et interrompant le signal modulé pendant une émission de données particulières et comprenant :
un ou plusieurs tampons d'entrée (552, 574) polarisés pendant la durée de la transmission de données particulière, chaque tampon d'entrée étant actif pour recevoir et mémoriser temporairement un signal de porteuse respectif ; et
un récepteur (534) couplé à au moins un desdits un ou plusieurs générateurs de signal pour recevoir au moins un signal de porteuse (550), le récepteur agissant pour abaisser en fréquence un signal reçu avec ledit au moins un signal de porteuse pendant toute la transmission de données particulières, même quand l'émetteur laisse passer et interrompt le signal modulé.

2. Dispositif selon la revendication 1, dans lequel l'émetteur est mis en oeuvre dans un circuit intégré et dans lequel au moins une partie de chacun desdits un ou plusieurs générateurs de signal est mise en oeuvre à l'extérieur du circuit intégré.

3. Dispositif selon la revendication 1, dans lequel lesdits un ou plusieurs générateurs de signal comprennent un premier oscillateur à commande en tension, VCO, (540) utilisé pour produire un signal de porteuse RF.

4. Dispositif selon la revendication 3, dans lequel lesdits un ou plusieurs générateurs de signal comprennent en outre un second VCO utilisé pour produire un signal de porteuse à fréquence intermédiaire, IF.

5. Dispositif selon la revendication 1, dans lequel lesdits un ou plusieurs générateurs de signal agissent pendant la durée de l'émission des données particulières.

6. Dispositif selon la revendication 1, dans lequel l'émetteur comprend en outre au moins un élément de circuit actif agissant pour produire le signal modulé et à alimentation réduite quand l'émetteur interrompt le signal modulé.

7. Dispositif selon la revendication 6, dans lequel l'émetteur comprend un amplificateur de puissance (560) agissant pour amplifier le signal modulé quand l'émetteur laisse passer et réduit en puissance le signal modulé quand l'émetteur interrompt le signal modulé.

8. Dispositif selon la revendication 1, dans lequel le récepteur comprend au moins un tampon d'entrée (574) polarisé pendant la durée de la transmission de données particulières, chaque tampon d'entrée agissant pour recevoir et mémoriser temporairement un signal de porteuse respectif.

9. Dispositif selon la revendication 8, dans lequel l'émetteur agit pour élever en fréquence directement ou indirectement (558) un signal émis avec un signal de porteuse RF et le récepteur agit pour abaisser en fréquence (576) le signal reçu avec le signal de porteuse RF.

10. Dispositif selon la revendication 1, dans lequel l'émetteur agit pour laisser passer et interrompre le signal modulé pendant chacune de plusieurs durées discrètes pendant la transmission de données particulières.

11. Dispositif selon la revendication 10, dans lequel la durée de chaque période est de 1,25 ms.

12. Dispositif selon la revendication 1, dans lequel le système de communication sans fil se conforme à la norme IS-95.

13. Dispositif selon la revendication 1 comprenant en outre un processeur de données agissant pour traiter les données à des débits multiples, et dans lequel l'émetteur laisse passer et interrompt le signal modulé au moins pendant un sous-ensemble des débits multiples.

14. Dispositif selon la revendication 13, dans lequel l'émetteur laisse passer le signal modulé pendant toute une trame, pour chaque trame émise à plein débit.

15. Dispositif selon la revendication 13, dans lequel l'émetteur laisse passer et interrompt le signal modulé pendant chaque trame émise à moins que plein débit.

16. Terminal mobile destiné à être utilisé dans un système de communication sans fil comprenant :
un générateur de signal (540, 542, 544) agissant pour fournir un signal de porteuse à une fréquence RF (550) ;
un émetteur (516) couplé au générateur de signal et agissant pour recevoir et moduler le signal de porteuse par un ou plusieurs signaux d'entrée pour produire un signal modulé, l'émetteur laissant passer et interrompant le signal modulé pendant une transmission de données particulières ; et
un récepteur (534) couplé au générateur de signal et agissant pour recevoir et abaisser en fréquence (576) un signal reçu avec le signal de porteuse pour produire un signal abaissé en fréquence pendant toute la transmission de données particulières, même quand l'émetteur laisse passer et interrompt le signal modulé, et
dans lequel chacun de l'émetteur et du récepteur inclut un tampon d'entrée (552, 574) agissant pour recevoir et mémoriser temporairement le signal d'entrée et polariser pendant la durée de la transmission des données particulières, même quand l'émetteur laisse passer et interrompt le signal modulé.
